# EUROPEAN PATENT APPLICATION

(11) **EP 2 144 465 A2**
(43) Date of publication of application: **13.01.2010**
(21) Application number: 09164760.2
(22) Date of filing: 07.07.2009
(51) Int. Cl.: H04W 52/08, H04W 52/10, H04W 52/24, H04W 52/48

(54) **Power control techniques**

(30) Priority: 07.07.2008 US 134188 P; 13.11.2008 US 291977
(71) Applicant: Intel Corporation, Santa Clara, CA 95052 (US)
(72) Inventor: Yin, Hujun, 95131 San Chose California (US); Parsa, Kourosh, 06878 Riverside Connecticut (US)
(74) Representative: Clarke, Jeffrey

(57) **Abstract**

Embodiments provide techniques for power control. For instance, a method exchanges one or more transmissions with a remote device in accordance with a retransmission protocol. In addition, a power control message is exchanged with the remote device through at least one of the one or more transmissions. Thus, closed loop power control may be performed through retransmission protocol communications.

## Description

### BACKGROUND

Many wireless communications systems adaptively adjust transmit power levels. These adjustments may combat wireless channel impairments such as fading and interference. For instance, uplink power control techniques may mitigate uplink multiple access interference (MAI), as well as maintain the quality of uplink communications.

There are typically two types of power control: closed loop, and open loop. In the context of an uplink between a base station and a mobile station, closed loop uplink power control involves a mobile station sending periodic reference signals to a base station across an uplink. Through the monitoring of such reference signals, the base station may direct the mobile station to adjust its transmit power level.

In contrast, open loop uplink power control involves the mobile station adjusting its transmit power level based on its signal strength measurements of downlink signals received from the base station. Such adjustments are largely based on an assumption of channel reciprocity (between downlink and uplink channels). Thus, such open loop power control is generally employed in time division duplexing (TDD) systems.

Open loop power control mechanisms can be implemented with relatively little communications overhead. However, these mechanisms are less reliable when downlink/uplink asymmetries exist. Thus, open loop power control is more commonly used to compensate for slow varying channel effects, such as path losses and shadow fading.

On the other hand, closed loop power control may be used to compensate for faster varying channel effects. Thus, closed loop mechanisms providing fast feedback may be generally desirable. However, closed loop power control mechanisms require a dedicated feedback control loop for each mobile station.

Thus, in environments having large numbers of mobile stations, the employment of closed loop power control mechanisms having fast feedback may unfortunately require significant communications overhead.

### SUMMARY

There is provided an apparatus comprising a transceiver module to receive a communication from a remote device across a wireless communications link, wherein the communication is associated with a retransmission protocol, an identification module to identify a power control command within the communication, and a closed loop power control module to direct the transceiver module to adjust a transmit power level in accordance with the power control command.

Optionally, the apparatus further comprises a strength determination module to determine a strength of the wireless communications link, and an open loop power control module to adjust the transmit power level based on the determined strength of the wireless link.

Optionally, the retransmission protocol is a hybrid automatic repeat request (HARQ) protocol.

Optionally, the wireless communications link is a WiMAX link.

Optionally, the wireless communications link is an LTE link.

There is also provided an apparatus comprising a transceiver module to receive a communication from a remote device across a wireless communications link, wherein the communication is associated with a retransmission protocol, a strength determination module to determine a strength of the wireless communications link based on the received communication, and a closed loop power control module to generate a power control command based on the determined strength, wherein the transceiver module is to send an outgoing wireless communication to the remote device, wherein the outgoing wireless communication is associated with the retransmission protocol and includes the power control command.

Optionally, the retransmission protocol is a hybrid automatic repeat request (HARQ) protocol.

Optionally, the wireless communications link is a WiMAX link.

Optionally, the wireless communications link is an LTE link.

There is also provided an apparatus comprising an open loop power control module to establish a transmit power level based on a strength of a wireless link with a remote device, and a closed loop power control module to establish the transmit power level based on a power control command, wherein the power control command is received from the remote device in a communication associated with a retransmission protocol.

Optionally, the closed loop power control module is to establish the transmit power level during the existence of communications traffic associated with the retransmission protocol, and wherein the open loop power control module is to establish the transmit power level in the absence of communications traffic associated with the retransmission protocol.

Optionally, the closed loop power control module is to refrain from establishing the transmit power level in the absence of communications traffic associated with the retransmission protocol.

Optionally, the apparatus further comprises a transceiver module to send wireless transmissions to the remote device at the transmit power level.

Optionally, the apparatus further comprises a link strength determination module to determine the strength of the link with the remote device.

Optionally, the open loop power control module is to establish the transmit power level on a periodic basis.

Optionally, the communication associated with the retransmission protocol includes a response to a previous payload transmission sent by the transceiver module.

Optionally, the communication associated with the retransmission protocol includes a resource allocation for a payload transmission and/or a resource allocation for a payload retransmission.

Optionally, the retransmission protocol is a hybrid automatic repeat request (HARQ) protocol.

There is still further provided a method comprising exchanging one or more transmissions with a remote device in accordance with a retransmission protocol exchanging a power control message with the remote device through at least one of the one or more transmissions.

Optionally, the retransmission protocol is a hybrid automatic repeat request (HARQ) protocol.

Optionally, the power control message includes a command to adjust an uplink transmit power level.

Optionally, the power control message includes a strength indication of a communications link.

### BRIEF DESCRIPTION OF THE DRAWINGS

In the drawings, like reference numbers generally indicate identical, functionally similar, and/or structurally similar elements. The drawing in which an element first appears is indicated by the leftmost digit(s) in the reference number. The present invention will be described with reference to the accompanying drawings, wherein:
**FIG. 1** is a diagram of an exemplary operational environment;
**FIG. 2** is a graph showing bursty traffic characteristics;
**FIGs. 3A** **and** **3B** are diagrams of exemplary apparatus implementations;
**FIGs. 4A** and **4B** are diagrams of exemplary exchanges between devices;
**FIG. 5** is a diagram of an exemplary logic flow; and
**FIGs. 6A** and **6B** are diagrams of exemplary message formats.

### DETAILED DESCRIPTION

Embodiments provide techniques for power control. For instance, a method exchanges one or more transmissions with a remote device in accordance with a retransmission protocol (such as HARQ). In addition, a power control message is exchanged with the remote device through at least one of the one or more transmissions. Thus, closed loop power control may be performed through retransmission protocol communications.

Also, an apparatus may include an open loop power control module, and a closed loop power control module. The open loop power control module establishes a transmit power level based on a strength of a wireless link with a remote device. However, the closed loop power control module establishes the transmit power level based on a power control command that is received from the remote device in a communication. This communication is associated with a retransmission protocol (e.g., HARQ).

The closed loop power control module may establish the transmit power level during the existence of communications traffic associated with the retransmission protocol; and, the open loop power control module may establish the transmit power level in the absence of communications traffic associated with the retransmission protocol. Moreover, in embodiments, the closed loop power control module may refrain from establishing the transmit power level in the absence of communications traffic associated with the retransmission protocol. Additionally, in embodiments, the open loop control module may refrain from establishing the transmit power level when there is communications traffic associated with the retransmission protocol. Embodiments, however, are not limited to these examples

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment. Furthermore, the particular features, structures or characteristics may be combined in any suitable manner in one or more embodiments.

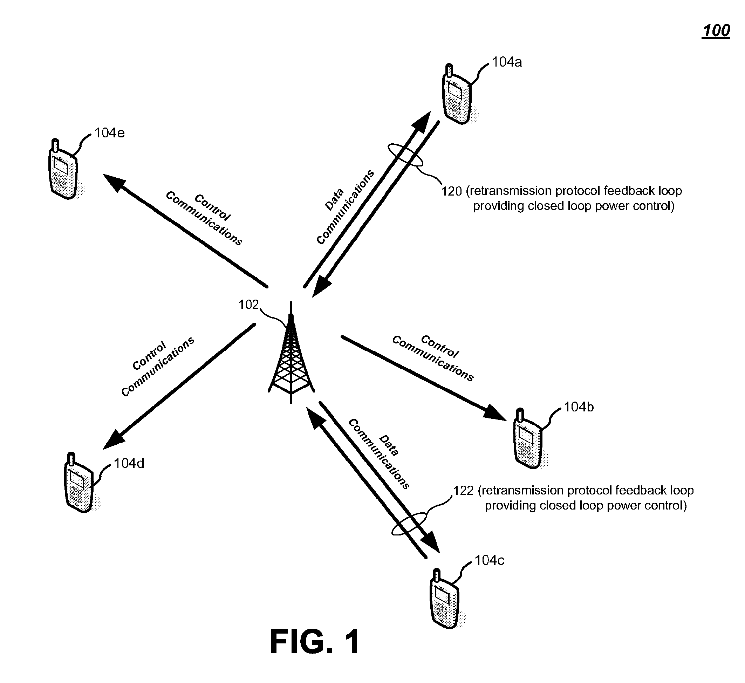

**FIG. 1** is a diagram of an exemplary operational environment 100. This environment includes a base station 102 and multiple mobile stations 104a-e. Each of these stations may be implemented in hardware, software, or any combination thereof.

Base station 102 provides communications service to mobile stations 104a-e. This communications service may be in accordance with various networks, such as Institute of Electrical and Electronic Engineers (IEEE) 802.16 WiMAX networks. Further exemplary networks include Evolution-Data Optimized (EVDO), High-Speed Packet Access (HSPA), Long Term Evolution (LTE), and LTE advanced networks. Embodiments, however, are not limited to these exemplary network types.

Communications among devices 102 and 104a-e involve the exchange of wireless signals. Such signals may be modulated according to orthogonal frequency division multiplexing (OFDM) techniques and/or orthogonal frequency division multiple access (OFDMA) techniques. However, other modulation techniques and/or signal formats may be employed. These exchanged wireless signals may share the same spectral resources (e.g., through a time division duplexing (TDD) resource allocation scheme). Alternatively, the wireless signals may utilize different spectral resources (e.g., through a frequency division duplexing (FDD) scheme). However, other allocations of spectral resources may be employed.

In **FIG. 1****,** communications among devices may include data communications, as well as control communications. Data communications involve the exchange of information pertaining to user applications. Exemplary user applications include telephony, messaging, e-mail, web browsing, content (e.g., video and audio) reception, and so forth. In contrast, control communications involve the exchange of information that is not associated with user applications. Examples of such control communications may include, for example, certain beacon transmissions by base station 102.

For purposes of illustration (and not limitation), **FIG. 1** shows base station 102 engaging in data communications with mobile stations 104a and 104c. Also, **FIG. 1** shows base station 102 engaging in control communications with mobile stations 104b, 104d, and 104e.

Data communications among devices may be in accordance with a retransmission protocol that provides for the resending of unsuccessfully received transmissions. One such retransmission protocol is the hybrid automatic repeat request (HARQ) protocol. HARQ is commonly used in unicast transmissions. However, HARQ may also be employed for other transmission types (e.g., multicast, broadcast, etc.).

In HARQ, when a transmitting device sends a payload transmission (e.g., a packet) to a receiving device, the receiving device attempts to decode the payload transmission. Based on the outcome of this attempt, the receiving device sends a response to the transmitting device. More particularly, if the payload transmission is successfully decoded, then the receiving device sends a positive acknowledgment (ACK) message to the transmitting device. However, if the payload transmission is unsuccessfully decoded, the receiving device sends a negative acknowledgment (NACK) message to the transmitting device. The receiving device may transmit such responses (e.g., ACKs and/or NACKs) according to a particular timing scheme (such as after a predetermined delay time interval has elapsed).

Such response transmissions determine subsequent actions by the transmitting device. For instance, if the transmitting device receives an ACK, it moves on to the next payload transmission (e.g., packet). However, if the transmitting device receives a NACK (or fails to receive a response transmission within a predetermined time interval), it retransmits a redundant version of the previous payload transmission.

Upon receiving the retransmission, the receiving device may again attempt decoding. This may involve combining the previous failed payload transmission(s) with the retransmission. Alternatively, this may involve attempting to decode the retransmission by itself. Accordingly, this process may continue until the receiving device successfully decodes the payload transmission, or until a maximum retransmission limit is reached.

HARQ protocols may employ synchronous techniques and/or asynchronous techniques. Asynchronous HARQ techniques involve explicit resource allocation (e.g., scheduling) for each retransmission. This provides flexibility in allocating resources (e.g., time and/or frequency) for each retransmission.

In contrast, synchronous HARQ techniques involve sending retransmissions within predetermined resources (e.g., at predetermined times relative to an initial payload transmission). For instance, once resources are allocated for the initial payload transmission, resource(s) for future retransmission(s) are also allocated. Thus, synchronous HARQ techniques do not require additional resource allocations to be made for each retransmission.

As described above, retransmission protocols, such as HARQ, employ feedback loops for data communications. For instance, **FIG. 1** shows a feedback loop 120 between base station 102 and mobile station 104a, as well as a feedback loop 122 between base station 102 and mobile station 104c. Each of these feedback loops are provided by employed retransmission protocol (e.g., HARQ) communications. In embodiments, such feedback loops may be further employed to perform closed-loop power control operations. Thus, transmissions associated with the retransmission protocol may include power control messages (e.g., power control commands).

Tight power control (e.g., power control having fast feedback) is not typically required for mobile stations that are not transmitting signals. This is because such mobile stations are not typically generating uplink transmissions that could contribute to interference and/or cause link quality degradation.

Therefore, embodiments may employ a traffic dependent power control strategy. This strategy provides a mix between open loop power control and closed loop power control. For instance, in embodiments, a mobile station may perform open loop power control during both data communications and control communications. Thus, the mobile station performs open loop power control when it is not generating uplink transmissions (e.g., when it is not engaging in data communications), as well as when it is generating uplink transmissions (e.g., during data communications). Also, the mobile station may perform (in conjunction with a base station) closed loop power control when it is generating uplink transmission(s).

In further embodiments, a mobile station may perform open loop power control during control communications, but not data communications. However, as indicated above, the mobile station may perform closed loop power control operations during data communications, but not during control communications.

As a result of this mixed approach, overhead traffic and consumption of system resources may be advantageously reduced. Moreover, in embodiments, base stations may initiate closed loop power control. As an example, a base station may trigger a short period of closed loop power control by sending a short un-recognizable packet to a mobile station. Through the corresponding NACK transmission and subsequent retransmissions, the mobile station's transmit power level may be quickly adjusted.

Thus, in embodiments, power control provided by retransmission protocol loops may advantageously provide a stable power adaptation mechanism. As a result, stable uplink transmissions may be maintained (especially when the modulation coding scheme (MCS) does not change). Moreover, techniques described herein may be used together with non-adaptive resource allocation schemes (e.g., persistent scheduling) in which resource allocation and MCS are fixed. For instance, power adaptation may be advantageously implicit so that there is no need to change the MCS or resource allocation while still maintaining stable link quality.

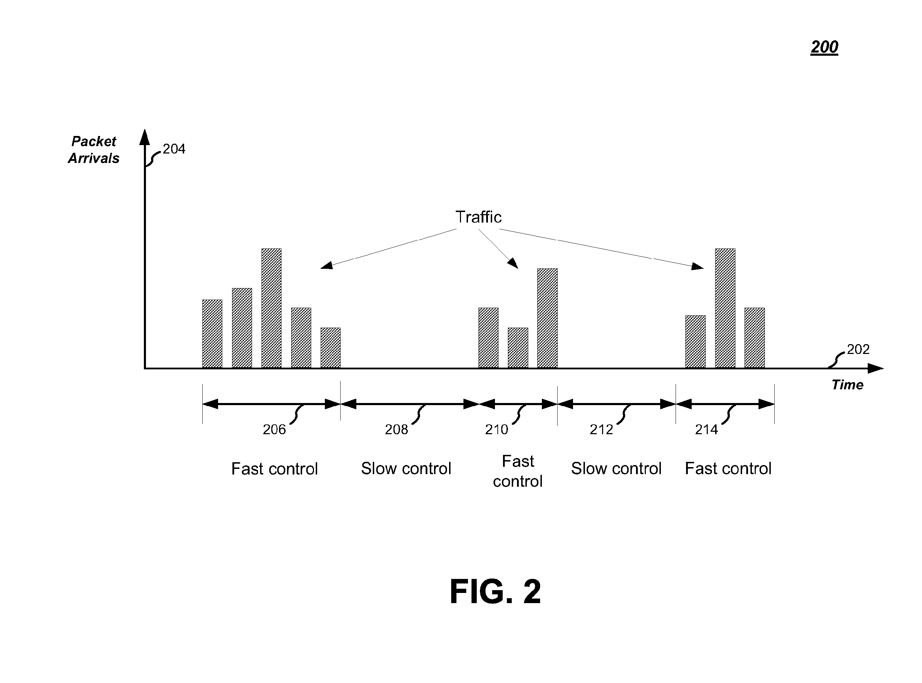

For instance, in modem broadband wireless data systems, traffic is typically bursty. Also, mobile stations typically send transmissions (e.g., engage in data communications) at low duty cycles. **FIG. 2** is a graph 200 showing such bursty traffic characteristics along a time axis 202. In particular, this graph shows packet arrivals (plotted with respect to an axis 204) for an exemplary TCP/IP (transmission Control Protocol / Internet Protocol) packet train model. **FIG. 2** shows heavy traffic at time intervals 206, 210, and 214. In contrast, light traffic is shown at time intervals 208 and 212.

In accordance with the mixed power control strategy described above, little or no closed loop power control operations occur during time intervals 208 and 212. Thus, these time intervals are indicated as being "slow control" intervals. In contrast, closed loop power control operations occur during time intervals 206, 210, and 214. Thus, these time intervals are indicated as being "fast control intervals."

Through the employment of this mixed approach, reductions in the number of exchanged closed loop power control messages may be achieved. As indicated above, this may advantageously reduce overhead traffic and consumption of system resources.

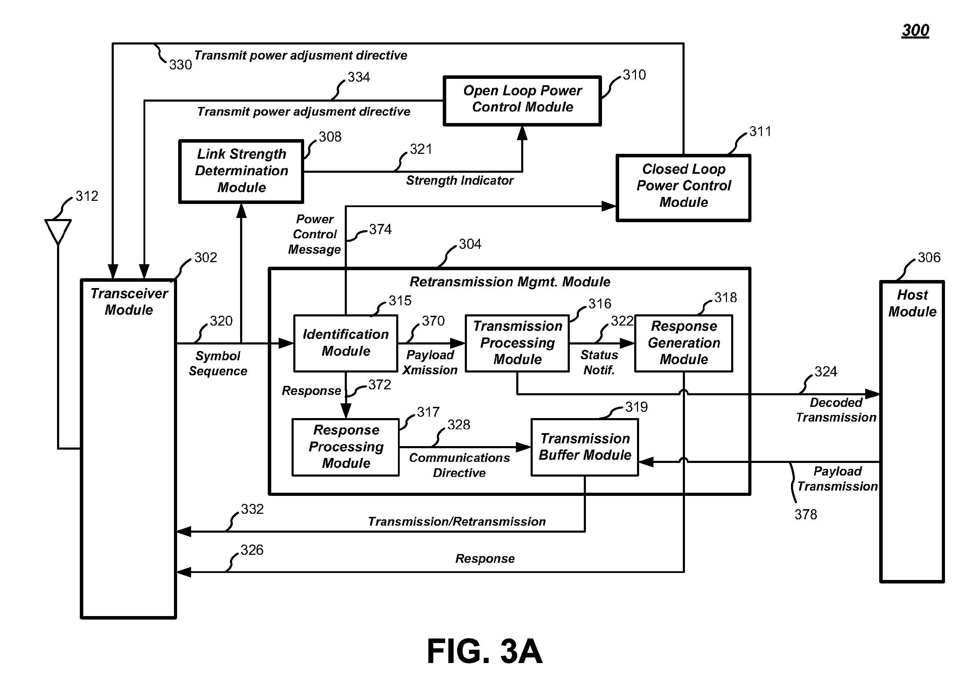

**FIG. 3A** is a diagram of an exemplary implementation 300. This implementation may be included in various devices. For example, in the context of **FIG. 1****,** implementation 300 may be included in one or more of mobile stations 104a-e. Embodiments, however, are not limited to these examples.

As shown in **FIG. 3A****,** implementation 300 may include a transceiver module 302, a retransmission management module 304, a host module 306, a link strength determination module 308, an open loop power control module 310, and a closed loop power control module 311. Also, **FIG. 3A** shows implementation 300 including an antenna 312. These elements may be implemented in hardware, software, or any combination thereof.

Transceiver module 302 exchanges wireless signals with remote devices via one or more antennas (such as antenna 312). For instance, transceiver module 302 may generate and transmit wireless signals based on symbols received from retransmission management module 304. This generation of signals may involve various operations, such as modulation, amplification, upconversion, and/or filtering. Transceiver module 302 may transmit these signals at various transmit power levels. Such transmit power levels may be established in accordance with closed loop and/or open loop power control algorithms.

Also, transceiver module 302 may receive signals from remote devices (via the one or more antennas). In turn, transceiver module 302 may generate corresponding symbols from the received signals. This may involve various operations, such as downconversion, demodulation, amplification, and/or filtering. The generated symbols may be sent to one or more elements within implementation 300.

To provide such features, transceiver module 302 may include various components, such as modulators, demodulators, amplifiers, filters, upconverters, and/or downconveters. Also, as described above, transceiver module 302 may vary the power at which it wirelessly transmits signals. Therefore, transceiver module 302 may include one or more components (e.g., variable gain amplifier(s)) to provide adjustable transmit power levels. Such components may be implemented in hardware (e.g., electronics), software, or any combination thereof.

The wireless signals exchanged by transceiver module 302 may be in various formats. For instance, in implementations employing LTE (e.g., LTE and/or LTE advanced) and/or WiMAX (e.g., WiMAX and and/or WiMAX II) communications, the exchanged signals may be orthogonal frequency division multiple access (OFDMA) signals. However, other signal types may be employed.

Retransmission management module 304 performs operations associated with a retransmission protocol, such as HARQ and/or ARQ. For instance, retransmission management module 304 handles (via transceiver module 302) the exchange of payload transmissions and corresponding responses with remote devices. In turn, retransmission management module 304 exchanges payload information included in such transmissions with host module 306.

This payload information may include messages or information associated with one or more protocols, as well as with one or more user applications. Exemplary user applications include telephony, messaging, e-mail, web browsing, content (e.g., video and audio) reception, and so forth. Accordingly, host module 306 may perform operations corresponding to such protocol(s) and/or user application(s).

As described above, retransmission management module 304 performs operations associated with a retransmission protocol, such as HARQ and/or ARQ. For instance, retransmission management module 304 sends payload transmissions to remote devices (via transceiver module 302). These payload transmissions may be previously sent transmissions (retransmissions) or new transmissions. In return, retransmission management module 304 receives corresponding responses (e.g., ACK/NACK messages) from remote devices.

Conversely, retransmission management module 304 also receives payload transmissions (retransmissions or new transmissions) that are originated by remote devices. Based on such received payload transmissions, retransmission management module 304 generates corresponding responses (e.g., ACK/NACK messages) for transmission to remote devices (via transceiver module 302).

As described herein, power control messages may be included within communications associated with the retransmission protocol (e.g., within payload transmissions, response transmissions, and/or resource allocation transmissions).

Retransmission management module 304 may include various elements. For example, **FIG. 3A** shows retransmission management module 304 including an identification module 315, a transmission processing module 316, a response processing module 317, a response generation module 318, and a transmission buffer module 319. As indicated above, these elements may be implemented in hardware, software, or any combination thereof.

Transmission buffer module 319 stores one or more payload transmissions. For instance, **FIG. 3A** shows transmission buffer module 319 receiving a payload transmission 378 from host module 306. This transmission may be sent and/or resent in accordance with the retransmission protocol. In embodiments, transmission buffer module 319 may include a storage medium, such as memory. Descriptions of exemplary storage media are provided below.

Identification module 315 identifies the contents of symbol streams received from transceiver module 302. In turn, identification module 315 forwards such contents to elements within implementation 300 for processing.

For instance, **FIG. 3A** shows identification module 315 receiving a symbol sequence 320 from transceiver module 302. This sequence corresponds to signals received from a remote device, such as a base station. Upon receipt of sequence 320, identification module 315 identifies its contents.

As indicated in **FIG. 3A****,** if symbol sequence 320 includes a payload transmission, identification module 315 forwards the payload transmission to transmission processing module 316 (as a received payload transmission 370). If symbol sequence 320 includes a response, identification module 315 forwards the response to response processing module 317 (as a received response 372). Also, if symbol sequence 320 includes a closed loop power control message, identification module 315 forwards the message to closed loop power control module 311 (as a power control message 374).

Transmission processing module 316 attempts to decode received payload transmissions (e.g., payload transmission 370). This may involve, for example, performing a cyclical redundancy check (CRC) and/or various other error detection/correction procedure(s). If the payload transmission can be correctly decoded, then the decoded transmission is sent to host module 306 for further processing (e.g., processing in accordance with protocol(s) and/or application(s)). For example, **FIG. 3A** shows transmission processing module 316 sending a decoded payload transmission 324 to host module 306.

In addition, transmission processing module 316 notifies response generation module 318 of such decoding results. For example, **FIG. 3A** shows transmission processing module 316 sending a status notification 322 to response generation module 318. This notification indicates whether payload transmission 370 has been correctly decoded or not.

Based on such notifications, response generation module 318 generates corresponding responses. For instance, **FIG. 3A** shows a response 326 corresponding to status notification 322. Response 326 may include an acknowledgement message (e.g., an ACK message if the transmission was correctly received, or a NACK message if the transmission was incorrectly received). **FIG. 3A** shows that response 326 is sent to transceiver module 302 for wireless transmission to the remote device.

As described above, identification module 315 may send received responses (such as response 372) to response processing module 317. In turn, response processing module 317 may direct transmission buffer module 319 whether to transmit or retransmit. For example, **FIG. 3A** shows response processing module 317 generating a corresponding communications directive 328, which is sent to transmission buffer module 319.

Communications directive 328 may instruct transmission buffer module 319 to resend a previously sent payload transmission when the received response 372 includes a NACK message. Alternatively, communications directive 328 may instruct transmission buffer module 319 to send a new payload transmission when received response 372 includes an ACK message. In turn, transmission buffer module 319 sends a transmission/retransmission 332 to transceiver module 302 for wireless transmission. In embodiments, communications directive 328 may be in accordance with network resource allocations (e.g., scheduling) for such transmissions and/or retransmissions.

Closed loop power control module 311 performs operations associated with closed loop power control algorithms. This may be based on received power control messages, such as power control message 374. For instance, closed loop power control module 311 may generate a transmit power adjustment directive 330 that is based on a command included in such a power control message. As shown in **FIG. 3A****,** directive 330 is sent to transceiver module 302. Upon receipt, transceiver module 302 adjusts its transmit power accordingly.

Open loop power control module 310 performs operations involving open loop power control procedures. This may involve making transmit power level adjustments for transceiver module 302. For instance, open loop power control module 310 may generate a transmit power adjustment directive 334 that instructs transceiver module 302 to adjust its transmit power level. Such directives may be based on the strength of a wireless link with a remote device. For example, transmit power adjustment directive 334 may be based on strength indicator 321, which is received from link strength determination module 308.

As described above, open loop power control module 310 may make transmit power level adjustments only in the absence of retransmission protocol communications. Alternatively, open loop power control module 310 make transmit power level adjustments in both the absence and presence of retransmission protocol communications.

Link strength determination module 308 determines the strength of wireless transmissions that transceiver module 302 receives from a remote device through one or more antennas (e.g., through antenna 312). Such transmissions may be particular data messages, beacon transmissions (e.g., pilot beacons), burst preambles, and so forth. From this determination, link strength determination module 308 generates strength indicator 321. This indicator indicates the quality of transmission(s) received from the remote device. Strength indicator 321 is sent to open loop power control module 310.

These strength determinations may involve the calculation of metrics, such as signal to interference (SI) ratios, and/or signal to noise and interference (SNI) ratios. Further exemplary metrics include counts (or ratios) of bit or symbol errors. Embodiments, however, are not limited to these metrics. Such metric calculations may be based on symbol sequence 320. Alternatively or additionally, such calculations may be based on other inputs (e.g., soft symbols received from transceiver module 302).

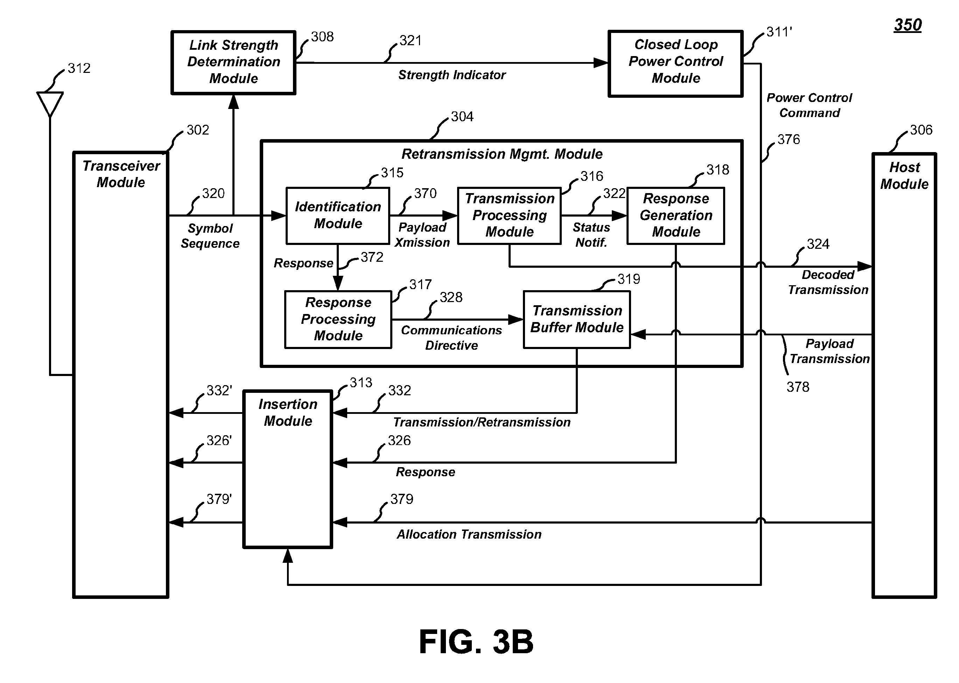

**FIG. 3B** is a diagram of an implementation 350, which may be included in a base station (e.g., in base station 102). Accordingly, implementation 350 may exchange signals with one or more mobile stations. However, in embodiments, implementation 350 may also be included in devices other than base stations. Implementation 350 includes various elements, which may be implemented in hardware, software, or any combination thereof.

Implementation 350 is similar to implementation 300 of **FIG. 3A****.** For instance, **FIG. 3B** shows implementation 350 including transceiver module 302, retransmission management module 304, host module 306, link strength determination module 308, and antenna 312. In addition, **FIG. 3B** shows that implementation 350 further includes an insertion module 313. However, instead of including closed loop power control module 311, implementation 350 includes a closed loop power control module 311'. Also, in embodiments, implementation 350 does not include open loop power control module 310.

In embodiments, transceiver module 302, retransmission management module 304, and host module 306 may operate in the manner described above with reference to **FIG. 3A****.** Thus, **FIG. 3B** shows retransmission management module 304 generating response 326 and transmission/retransmission 332. As described above, these may be based on received symbol sequence 320. However, in the context of **FIG. 3B****,** symbol sequence 320 may correspond to wireless signals received from one or more mobile stations.

Also, implementation 350 may generate resource allocation messages to be sent to remote device(s). For instance, **FIG. 3B** shows host module 306 generating an allocation transmission 379. Allocation transmission 379 may indicate resources for remote mobile station(s) to send transmissions and/or retransmissions. In embodiments, allocation transmission 379 may be included in a beacon transmission. Embodiments, however, are not limited to this example.

**FIG. 3B** shows closed loop power control module 311' generating a power control command 376 that is sent to insertion module 313. Power control command 376 may be based on the strength of a wireless link with a remote device. Thus, **FIG. 3B** shows closed loop power control module 311' receiving strength indicator 321 from link strength determination module 308.

Implementation 350 may insert such messages into transmissions/retransmissions, responses, and/or resource allocation messages. For example, **FIG. 3B** shows insertion module 313 generating a transmission/retransmission 332', a response 326', and an allocation message 379' from transmission/retransmission 332, response 326, and allocation message 379, respectively.

This generation involves inserting a power control message (e.g., power control message 377) into one or more of transmission/retransmission 332, response 326, and allocation message 379. Thus, through this technique, transmissions associated with a retransmission protocol may include closed loop power control messages.

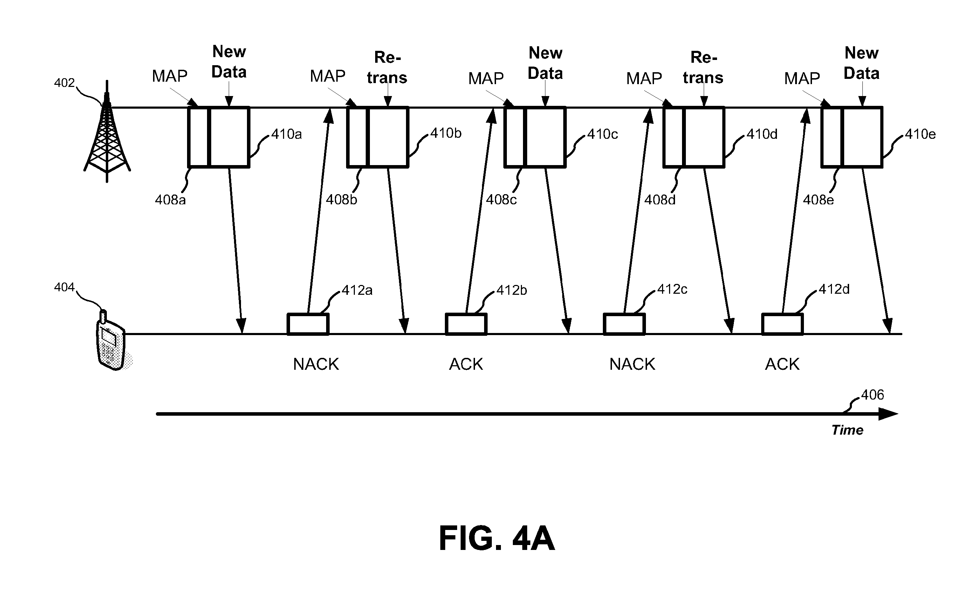

**FIG. 4A** is a diagram of an exemplary exchange between a base station 402 and a mobile station 404. More particularly, **FIG. 4A** shows data communications in accordance with a downlink asynchronous HARQ protocol.

For instance, **FIG. 4A** shows a sequence of transmissions along a time axis 406. These transmissions include downlink MAP transmissions 408a-e, downlink payload transmissions 410a-e, and uplink acknowledgement transmissions 412a-d.

Downlink MAP transmissions 408a-e, which are transmitted by base station 402, provide control information. For example, MAP transmissions 408a-e may provide resource allocations for data communications. Also, in embodiments, MAP transmissions 408a-e may convey power control messages.

Downlink payload transmissions 410a-e convey data from base station 402 to mobile station 404. Such data may be associated with one or more user applications. Payload transmissions 410a-e may be allocated by MAP transmissions 408a-e. For instance, each of MAP transmissions 408a-e may individually allocate payload transmissions 410a-e, respectively. Embodiments, however, are not limited to such allocation techniques.

Base station 404 sends uplink acknowledgement transmissions 412a-e to indicate whether downlink transmissions have been successfully received. For example, **FIG. 4A** shows that acknowledgement transmissions 412b and 412d are ACKs (indicating that payload transmissions 410b and 410d were successfully received). In contrast, acknowledgement transmissions 412a and 412c are NACKs (indicating a failure to receive payload transmissions 410a and 410c). As a result, downlink payload transmissions 410b and 410d are retransmissions of payload transmissions 410a and 410c, respectively.

In embodiments, closed loop uplink power control may be implemented through the HARQ transmissions of **FIG. 4A****.** For instance, base station 402 may use one or more of received acknowledgement transmissions 412a-e to assess the quality of its uplink with mobile station 404. This assessment may involve determining a signal to noise and interference ratio (SNIR). Embodiments, however, are not limited to SNIR-based assessments.

Based on such an assessment, base station 402 may determine an uplink transmit power adjustment for mobile station 404. In turn, the adjustment may be conveyed as a power control command within one or more downlink MAP transmissions 408.

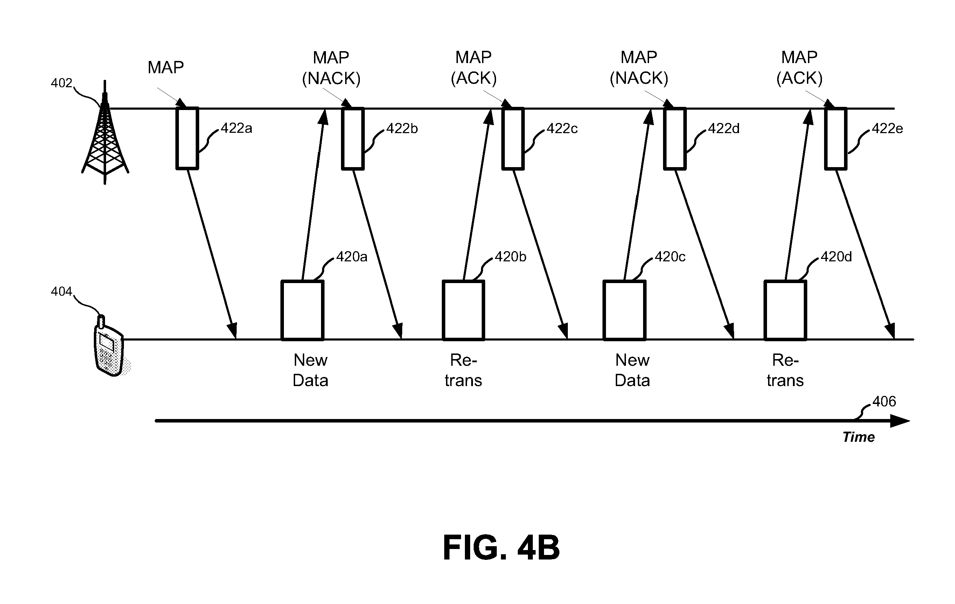

**FIG. 4B** is a diagram of a further exemplary exchange between base station 402 and mobile station 404. Although similar to **FIG. 4A****,** this diagram shows data communications in accordance with an uplink asynchronous HARQ protocol. More particularly, **FIG. 4B** shows a sequence of uplink payload transmissions 420a-d, and a sequence of downlink MAP transmissions 422a-e.

Downlink MAP transmissions 422a-e, which are transmitted by base station 404, provide control information, such as allocations for uplink payload transmissions 420a-d. Also, they may include acknowledgements corresponding to uplink payload transmissions 420a-d. For instance, **FIG. 4B** shows that MAP transmissions 422c and 422e include ACKs (indicating that payload transmissions 420b and 420d were successfully received). In contrast, MAP transmissions 422b and 422d include NACKs (indicating a failure to receive payload transmissions 420a and 420c). As a result, uplink payload transmissions 420b and 420d are retransmissions of payload transmissions 420a and 420c, respectively.

Closed loop uplink power control may be implemented through the HARQ transmissions of **FIG. 4B****.** For instance, base station 402 may use one or more of uplink payload transmissions 420a-e to assess the quality of its uplink with mobile station 404. This assessment may involve (but is not limited to) determining a signal to noise and interference ratio (SNIR).

Based on such an assessment, base station 402 may determine an uplink transmit power adjustment for mobile station 404. In turn, the adjustment may be conveyed as a power control command within one or more of downlink MAP transmissions 422a-e.

As shown in **FIGs. 4A** and **4B****,** the utilization HARQ transmissions, eliminates a need for an additional feedback loop to perform closed loop power control. Also, these diagrams demonstrate that closed loop power control operations will occur when data communications (e.g., uplink and/or downlink payload transmissions) also occur. Further, as described herein, open loop power control may be performed in combination with closed loop power control. When this occurs, open loop transmit power level adjustments may occur at a slower rate.

As described above, HARQ-based closed loop power control may occur at a relatively fast rate. For instance, in an exemplary network that employs a 5 millisecond HARQ retransmission cycle and a maximum retransmission count of six, a closed loop power control adjustment may be achieved within a time interval that is between 5 and 30 milliseconds. Further, as indicated above, open loop transmit power level adjustments may occur at a slower rate. In this context, exemplary open loop adjustment rates are once every 50-100 milliseconds.

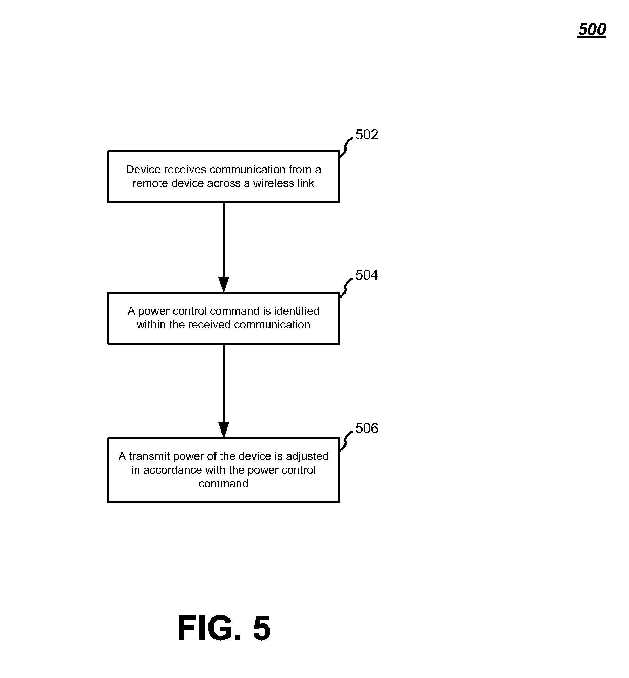

**FIG. 5** illustrates an embodiment of a logic flow. In particular, **FIG. 5** illustrates a logic flow 500, which may be representative of the operations executed by one or more embodiments described herein. Although **FIG. 5** shows a particular sequence, other sequences may be employed. Also, the depicted operations may be performed in various parallel and/or sequential combinations.

This flow of **FIG. 5** is described in the context of a device that engages in communications with a remote device. This flow may be performed by the devices and implementations described herein and shown in the drawings. Embodiments, however, are not limited to these examples.

**FIG. 5** shows that, at a block 502, the device receives a communication from a remote device across a wireless communications link. This communication is associated with a retransmission protocol (e.g., HARQ and/ARQ). For instance, the communication may be an acknowledgement message (e.g., ACK or NACK). Also, the communication may be a payload transmission or retransmission. Further, the communication may be a resource allocation for a payload transmission, or a resource allocation for a payload retransmission. In the context of **FIGs. 3A** and **3B****,** block 502 may be performed by transceiver module 302.

At a block 504, a power control command is identified within the received communication. Within the implementation of **FIG. 3A****,** this may be performed by identification module 315.

In accordance with the power control command, a transmit power level of the device is adjusted at a block 506. Referring again to **FIG. 3A****,** this may involve closed loop power control module 311 sending transmit power adjustment directive 330 to transceiver module 302.

As described above, transmission and retransmissions are allocated (e.g., scheduled) in networks employing asynchronous HARQ. For example, in WiMAX networks, a base station typically transmits such scheduling information in a downlink MAP information element (IE) for a retransmission.

Thus, in embodiments, an uplink ACK or NACK coupled with an allocation IE (for either a transmission or retransmission) in the downlink constitutes a closed loop for power control. For instance, the base station may use the uplink ACK/NACK transmission for uplink link quality estimation, while the downlink MAP IE may be used to convey a power control command.

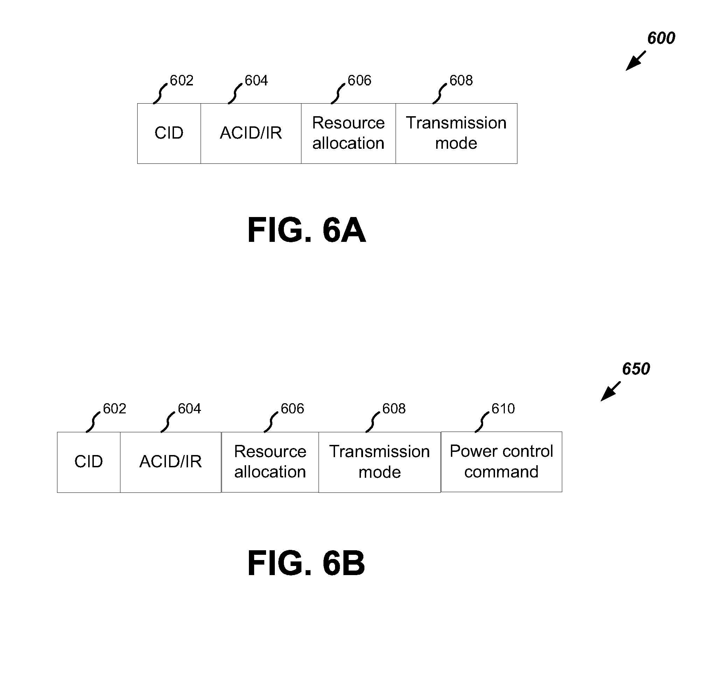

**FIG. 6A** is a diagram of a convention WiMAX HARQ IE 600. A shown in **FIG. 6A****,** this IE includes a CID filed 602, an ACID/IR field 604, a resource allocation field 606, and a transmission mode 608.

Embodiments may include power control commands in HARQ IEs. An example of this is shown in **FIG. 6B****.** In particular, **FIG. 6B** is a diagram of a WiMAX HARQ IE 650. Although similar to the IE in **FIG. 6A****,** the HARQ IE of **FIG. 6B** further includes a power control command field 610. The size of this field may be (but is not limited to) 1 or 2 bits. Thus, HARQ IE 602 provides for the delivery of power control commands through HARQ communications.

Although **FIG. 6B** provides an example of power control commands included in WiMAX HARQ IEs, other techniques may be employed. For instance, power control information may be alternatively or additionally transmitted independently from other downlink control information. Thus, embodiments are not limited to this example.

As described herein, various embodiments may be implemented using hardware elements, software elements, or any combination thereof. Examples of hardware elements may include processors, microprocessors, circuits, circuit elements (e.g., transistors, resistors, capacitors, inductors, and so forth), integrated circuits, application specific integrated circuits (ASIC), programmable logic devices (PLD), digital signal processors (DSP), field programmable gate array (FPGA), logic gates, registers, semiconductor device, chips, microchips, chip sets, and so forth.

Examples of software may include (but are not limited to) software components, programs, applications, computer programs, application programs, system programs, machine programs, operating system software, middleware, firmware, software modules, routines, subroutines, functions, methods, procedures, software interfaces, application program interfaces (API), instruction sets, computing code, computer code, code segments, computer code segments, words, values, symbols, or any combination thereof.

Some embodiments may be implemented, for example, using a machine-readable medium or article which may store an instruction or a set of instructions that, if executed by a machine, may cause the machine to perform a method and/or operations in accordance with the embodiments. Such a machine may include, for example, any suitable processing platform, computing platform, computing device, processing device, computing system, processing system, computer, processor, or the like, and may be implemented using any suitable combination of hardware and/or software.

The machine-readable medium or article may include, for example, any suitable type of memory unit, memory device, memory article, memory medium, storage device, storage article, storage medium and/or storage unit, for example, memory, removable or non-removable media, erasable or non-erasable media, writeable or re-writeable media, digital or analog media, hard disk, floppy disk, Compact Disk Read Only Memory (CD-ROM), Compact Disk Recordable (CD-R), Compact Disk Rewriteable (CD-RW), optical disk, magnetic media, magneto-optical media, removable memory cards or disks, various types of Digital Versatile Disk (DVD), a tape, a cassette, or the like. The instructions may include any suitable type of code, such as source code, compiled code, interpreted code, executable code, static code, dynamic code, encrypted code, and the like, implemented using any suitable high-level, low-level, object-oriented, visual, compiled and/or interpreted programming language.

While various embodiments of the present invention have been described above, it should be understood that they have been presented by way of example only, and not in limitation. Accordingly, it will be apparent to persons skilled in the relevant art that various changes in form and detail can be made therein without departing from the spirit and scope of the invention.

For instance, embodiments may perform closed loop power control through retransmission protocol (e.g., HARQ) transmissions. In embodiments, other power closed loop power control mechanisms may be employed as well. As examples, channel quality indicator mechanisms (e.g., WiMAX channel quality indicator channel (CQICH)) may also be employed. Also, an SNIR received through a CQICH can be used to provide an indicator of uplink quality.

Moreover, embodiments may employ retransmission protocols other than HARQ. One such protocol is ARQ. For instance, uplink ACK/NACK transmissions in accordance with ARQ can be used in the estimation of link quality.

Thus, the breadth and scope of the present invention should not be limited by any of the above-described exemplary embodiments, but should be defined only in accordance with the following claims and their equivalents.

## Claims

1. An apparatus, comprising:
a transceiver module to receive a communication from a remote device across a wireless communications link, wherein the communication is associated with a retransmission protocol;
an identification module to identify a power control command within the communication; and
a closed loop power control module to direct the transceiver module to adjust a transmit power level in accordance with the power control command.

2. The apparatus of claim 1, further comprising:
a strength determination module to determine a strength of the wireless communications link; and
an open loop power control module to adjust the transmit power level based on the determined strength of the wireless link.

3. An apparatus, comprising:
a transceiver module to receive a communication from a remote device across a wireless communications link, wherein the communication is associated with a retransmission protocol;
a strength determination module to determine a strength of the wireless communications link based on the received communication; and
a closed loop power control module to generate a power control command based on the determined strength;
wherein the transceiver module is to send an outgoing wireless communication to the remote device, wherein the outgoing wireless communication is associated with the retransmission protocol and includes the power control command.

4. The apparatus of claim 1 or 3, wherein the wireless communications link is a WiMAX link.

5. The apparatus of claim 1 or 3, wherein the wireless communications link is an LTE link.

6. An apparatus, comprising:
an open loop power control module to establish a transmit power level based on a strength of a wireless link with a remote device; and
a closed loop power control module to establish the transmit power level based on a power control command;
wherein the power control command is received from the remote device in a communication associated with a retransmission protocol.

7. The apparatus of claim 6:
wherein the closed loop power control module is to establish the transmit power level during the existence of communications traffic associated with the retransmission protocol; and
wherein the open loop power control module is to establish the transmit power level in the absence of communications traffic associated with the retransmission protocol.

8. The apparatus of claim 7, wherein the closed loop power control module is to refrain from establishing the transmit power level in the absence of communications traffic associated with the retransmission protocol.

9. The apparatus of claim 6, further comprising a transceiver module to send wireless transmissions to the remote device at the transmit power level.

10. The apparatus of claim 6, further comprising a link strength determination module to determine the strength of the link with the remote device.

11. The apparatus of claim 6, wherein the open loop power control module is to establish the transmit power level on a periodic basis.

12. A method, comprising:
exchanging one or more transmissions with a remote device in accordance with a retransmission protocol;
exchanging a power control message with the remote device through at least one of the one or more transmissions.

13. The method of claim 12 or the apparatus of claims 1 or 3, wherein the retransmission protocol is a hybrid automatic repeat request (HARQ) protocol.

14. The method of claim 12, wherein the power control message includes a command to adjust an uplink transmit power level.

15. The method of claim 12, wherein the power control message includes a strength indication of a communications link.
